# EUROPEAN PATENT APPLICATION

(11) **EP 3 913 029 A1**
(43) Date of publication of application: **24.11.2021**
(21) Application number: 20762316.6
(22) Date of filing: 14.02.2020
(51) Int. Cl.: C09J 11/04, C09J 11/06, C09J 123/08, C09J 131/04

(54) **ETHYLENE VINYL ACETATE HOT MELT ADHESIVE MANUFACTURING METHOD, AND HOT MELT ADHESIVE**

(30) Priority: 26.02.2019 JP 2019032654
(71) Applicant: Moresco Corporation, Kobe-shi, Hyogo 650-0047 (JP)
(72) Inventor: FUJII, Mamiko, Kobe-shi, Hyogo 650-0047 (JP); ISHIOKA, Masashi, Kobe-shi, Hyogo 650-0047 (JP); FUKUDA, Katsuhito, Kobe-shi, Hyogo 650-0047 (JP)
(74) Representative: Vossius & Partner Patentanwälte Rechtsanwälte mbB
(86) International application number: PCT/JP2020/005845
(87) International publication number: WO 2020/175188

(57) **Abstract**

One aspect of the present invention is a method for producing an ethylene vinyl acetate hot-melt adhesive, comprising: introducing a liquid including at least one of water and alcohol into a heating kneader while or after kneading a hot-melt adhesive material in a liquid state, at an amount of 0.05 parts by mass or more with respect to 100 parts by mass of the hot-melt adhesive material; and performing vacuuming while heating stirring or dispersing the hot-melt adhesive material and the liquid so as to come into contact with each other.

## Description

### Technical Field

The present invention relates to a method for producing an ethylene vinyl acetate hot-melt adhesive.

### Background Art

Ethylene vinyl acetate (EVA) hot-melt adhesives is widely used in the fields of packaging of foods and beverage, bookbinding, and other fields for the advantage of their significant contribution to a productivity improvement attributed to excellence in a high speed operability, adhesiveness to a wide variety of adherends, and economic performance.

Meanwhile, such an EVA hot-melt adhesive has a peculiar odor, and thus has a concern about odor transfer from a packaging container adopting the hot-melt adhesive to a food, and makes an inferior environment resulting from a large amount of odor from a production site where the hot-melt adhesive is heated. Under the circumstances, there are a strong demand for odor lowering.

The odor is caused by a monomer or a compound with low degree of polymerization based on: vinyl acetate which is an unreactive monomer contained in EVA serving as a main component; acetic acid generated by decomposition of an acetoxy group (to be deacetic acid) at a high temperature during the production and the application; and vinyl acetate generated by depolymerization.

The odor causing substances are heated to a high temperature when a hot-melt adhesive is produced even with use of EVA having a high purification. Therefore, such an odor causing substance is inevitably generated and thus is an unavoidable drawback of the EVA hot-melt adhesive.

Methods reported for decreasing odor components contained in a hot-melt adhesive include, for example, a method of supplying water of 0.15% by weight or more when supplying polyolefin to an axial or biaxial extruder (Patent Literature 1), and a method of adding a specific aldehyde scavenger (Patent Literature 2).

However, the method described in Patent Literature 1 fails to achieve a sufficient deodorization effect due to a short time of a contact between water and a hot-melt material. Besides, the method described in Patent Literature 2 exerts only a limited deodorization effect since aminobenzamide used as the aldehyde scavenger has a peculiar odor and/or there is an upper limit in an addition amount of such an additive.

Moreover, ethylene ethyl acrylate (EEA) having a structure and physical properties similar to those of the EVA was proposed as a substitute. However, the EEA also has a peculiar odor different from those of acetic acid and vinyl acetate with a poor selectivity from too few types to meet various design needs of a hot-melt adhesive, and further is expensive.

An object of the present invention is to solve the aforementioned drawbacks. Specifically, an object of the present invention is to lower an odor representing the defect of an EVA hot-melt adhesive by techniques applicable to a wide variety of EVA hot-melt adhesives without restricting various performances of conventional EVA hot-melt adhesives.

### Citation List

### Patent Literature

Patent Literature 1: Japanese Unexamined Patent Publication No. HEI 10-193436
Patent Literature 2: Japanese Unexamined Patent Publication No. 2017-125181

### Summary of Invention

The present inventors found that a configuration to be described below could achieve the aforementioned object after a great deal of studies for solving the drawbacks, then reconsidered the studies under the found knowledge, and finally completed the present invention.

Specifically, a method for producing an ethylene vinyl acetate hot-melt adhesive according to one aspect of the present invention comprises: introducing a liquid including at least one of water and alcohol aqueous solution into a heating kneader while or after kneading a hot-melt adhesive material in a liquid state, at an amount of 0.05 parts by mass with respect to 100 parts by mass of the hot-melt adhesive material; and performing vacuuming while heating stirring or dispersing the hot-melt adhesive material and the liquid so as to come into contact with each other.

### Description of Embodiments

As described above, the method for producing an EVA hot-melt adhesive according to the present invention comprises: introducing a liquid including at least one of water and alcohol into a heating kneader while or after kneading a hot-melt adhesive material in a liquid state, at an amount of 0.05 parts by mass with respect to 100 parts by mass of the hot-melt adhesive material; and performing vacuuming; and performing vacuuming while heating stirring or dispersing the hot-melt adhesive material and the liquid so as to come into contact with each other.

This configuration can facilitate production of an EVA hot-melt adhesive with a low odor, thereby achieving both various performances of the EVA hot-melt adhesive and a low odor. Specifically, the present invention can lower an odor representing the defect of an EVA hot-melt adhesive by using techniques applicable to a wide variety of EVA hot-melt adhesives without restricting the various performances of conventional EVA hot-melt adhesives. Furthermore, this way eliminates the necessity of using a special material, and therefore a cost reduction is attained.

Hereinafter, an embodiment according to the present invention will be described in detail, but the present invention should not be limited thereto.

First, EVA hot-melt adhesive materials adoptable in the embodiment may include a base resin, a tackifier, a wax, and other additive, which are conventionally used for such a hot-melt adhesive, without any particular limitation. Particularly, the producing method according to the embodiment can provide an EVA hot-melt adhesive with a low odor even by using any EVA hot-melt adhesive material.

Specific examples of the material adoptable as the base resin include a thermoplastic resin serving as a component constituting the EVA hot-melt adhesive without any particular limitation.

The EVA thermoplastic resin is not particularly limited as long as the resin is used as an EVA thermoplastic resin in the hot-melt adhesive. Examples of the EVA thermoplastic resin include a copolymer synthesized from ethylene and vinyl acetate.

The EVA base resins listed above may be used alone or in combination of two or more.

Similarly, as the tackifier, a synthetic resin tackifier typically used for the hot-melt adhesive, e.g., an aromatic, aliphatic, or alicyclic petroleum resin, or a natural resin tackifier, and a hydrogen additive are applicable without any particular limitation. Examples of the natural petroleum resin can include natural rosin, denatured rosin, hydrogenated rosin, glycerol ester of natural rosin, glycerol ester of denatured rosin, pentaerythritol ester of natural rosin, pentaerythritol ester of denatured rosin, pentaerythritol ester of hydrogenated rosin, a copolymer of natural terpene, a three-dimensional polymer of natural terpene, a hydroxy derivative of a copolymer of hydrogenated terpene, a polyterpene resin, and a hydroxy derivative of a phenol-based denatured terpene resin. Examples of the synthetic resin include an aliphatic petroleum hydrocarbon resin, a hydroxy derivative of the aliphatic petroleum hydrocarbon resin, an aromatic petroleum hydrocarbon resin, a hydroxy derivative of the aromatic petroleum hydrocarbon resin, a cyclic aliphatic petroleum hydrocarbon resin, and a hydroxy derivative of the cyclic aliphatic petroleum hydrocarbon resin. The tackifiers listed above may be used alone or in combination of two or more.

A wax is not particularly limited as long as the wax is used as a wax contained in the hot-melt adhesive. Examples of the wax include a synthetic wax, a petroleum wax, and a natural wax. Examples of the synthetic wax include a Fischer-tropsch wax, and a polyolefin wax, such as a polyethylene wax and a polypropylene wax. Examples of the petroleum wax include a paraffin wax, a microcrystalline wax, and petrolatum. Examples of the natural wax include a montane wax, a Japan wax, a carnauba wax, beeswax, and a Custer wax. The waxes listed above may be used alone or in combination of two or more.

Further, adoptable additives may include an antioxidant, a thermal stabilizer, a light stabilizer, an ultraviolet absorber, a filler, a surfactant, a coupling agent, a colorant, an antistatic agent, a flame retardant, and a plasticizer.

For example, examples of the antioxidant include a phenolic antioxidant and an organic Sulphur antioxidant. Examples of the phenolic antioxidant include: 2,6-di-tert-butyl-4-methylphenol; n-octadecyl-3-(3,5-di-tert-butyl-4-hydroxyphenyl)propionate; 2-tert-butyl-6-(3-tert-butyl-2-hydroxy-5-methylbenzyl)-4-methylphenyl acrylate; tetrakis [methylene-3 (3,5-di-tert-butyl-4-hydroxyphenyl)propionate] methane. Examples of the organic Sulphur antioxidant include: dilauryl-3,3'-thiodipropionate; dimyristyl-3,3'-thiodipropionate; distearyl-3,3'-thiodipropionate; pentaerythrityl tetrakis (3-lauryl thiodipropionate). The antioxidants listed above may be used alone or in combination of two or more.

The producing method according to the embodiment comprises a step of introducing a liquid into a heating kneader while or after kneading an EVA hot-melt adhesive material in a liquid state; and a step of performing heating stirring or dispersing, and vacuuming.

The step of introducing the liquid into the heating kneader may be performed while kneading the EVA hot-melt adhesive material or after completing the kneading the EVA hot-melt adhesive material, as long as the EVA hot-melt adhesive material is precedingly put into the heating kneader. Preferably, the step is performed after completing the kneading the material. In the embodiment, the term "completing the kneading" means that a hot-melt adhesive material (e.g., a base resin and a tackifier) indicates the state of a uniform fluidity.

For the heating kneader, a typically available producing device for stirring and kneading a hot-melt adhesive is adoptable for the heating kneader. For example, general methods for producing a hot-melt adhesive include a continuous processing method and a batched processing method. A ruder, an extruder, a biaxial taper screw, or other device is adoptable as a heating kneader employing the continuous processing method. A stirring kneader, a Bunbury mixer, a kneader, or other device is adoptable as a heating kneader employing the batched processing method.

The liquid to be introduced into the heating kneader is a liquid including at least one of water and alcohol. In other words, the liquid in the embodiment may be water alone, alcohol alone, or an alcohol aqueous solution containing both water and alcohol.

An alcohol concentration is not particularly limited in use of the alcohol aqueous solution as the liquid. A dilute alcohol aqueous solution of 10% by mass or more is preferable from the viewpoint of an odor lowering effect obtainable at a high concentration. Moreover, in use of the alcohol aqueous solution as the liquid, the EVA hot-melt adhesive material is required to be washed with water after the liquid composed of the alcohol aqueous solution is introduced. Away of the washing with water is not particularly limited. With an introducing water into the heating kneader during a time equivalent to the time of contact between the alcohol aqueous solution and the adhesive material, the EVA hot-melt adhesive material can wash.

Such introduction of the liquid into the heating kneader is performed at an amount of 0.05 parts by mass or more with respect to 100 parts by mass of the hot-melt adhesive material. The introduced amount of less than 0.05 parts by mass may lead to failure in obtaining an odor lowing effect. The introduced amount of the liquid is more preferably 0.35 parts by mass or more.

The odor lowering effect increases as the introduced amount increases, and therefore, it is unnecessary to particularly set an upper limit of the introduced amount. However, 50 parts by mass or less are preferable, and 25 parts by mass or less are more preferable with respect to 100 parts by mass of the hot-melt adhesive material in consideration of a cost and a required time for the steps.

The rate of introducing the liquid into the heating kneader is not particularly limited, but the introduction is preferably performed at an introduction rate of about 50 ppm/min to 12500 ppm/min for 2,000g of the hot-melt adhesive material.

Ways of introducing the liquid is not particularly limited in the embodiment, and the liquid may be introduced from above, below, or side of the heating kneader. Specifically, for instance, the liquid can be introduced from below and/or the side of the heating kneader, thereby the liquid can be introduced in a state of being sufficiently dispersed in the hot-melt adhesive.

After the liquid is introduced into the heating kneader, vacuuming is performed while heating stirring or dispersing the hot-melt adhesive material and the liquid so as to come into contact with each other. A heating temperature at this time is not particularly limited as long as the temperature is equal to or higher than a melting temperature of the hot-melt adhesive material, and thus can be appropriately set depending on a type of the base resin used as the hot-melt adhesive material.

The heating stirring or dispersing can be performed by a conventionally known way in this technical field. Such a way includes using, for example, a paddle, a turbine, a propeller, an anchor, a helical ribbon, a Maxblend, a Fullzone, a screw, a blade, an MR-205, a Hi-F mixer, and a Sanmeler. The devices may be used alone or in combination of two or more.

The vacuuming is preferably performed at an exhaust rate in a volume 0.25 or more times larger than a volume of the heating kneader per minute until a degree of vacuum becomes higher than a gauge pressure of -60kPa. The vacuuming performed under this condition can sufficiently suppress the amounts of residual acetic acid and residual vinyl acetate.

The way of vacuuming in the embodiment is not particularly limited. Specifically, the vacuuming can be performed, for example, by depressurizing until the above degree of vacuum with a vacuum pump which is adjusted so as to have the above exhaust rate per minute.

The exhaust rate per minute is more preferably in the same volume as or in a volume more times with respect to the volume of the heating kneader. An upper limit of the exhaust rate per minute is not particularly required to be set, but is preferably in a volume 17.5 times or less with respect to the volume of the heating kneader from the viewpoints of a facility size increase and a cost reduction.

The vacuuming is more preferably performed at a degree of vacuum higher than a gauge pressure of -90kPa. An upper limit is not particularly required to be set, but the degree of vacuum is preferably lower than a gauge pressure of -101kPa to avoid a facility damage, a facility size increase, a cost increase, and other defects.

As described above, introducing the liquid into the hot-melt adhesive material under a specific condition is prospected to improve an adsorption effect by increasing a contact area between the liquid and the material more effectively than by dispersing a normal gas. As a result, a low odor and odorless hot-melt adhesive can be provided.

Furthermore, the producing method according to the embodiment may comprise a step of recovering a liquid containing volatile organic compounds by cooling and condensing an exhaust gas exhausted from the heating kneader.

This is advantageous to prolong the life of the vacuum pump without reducing lubricity and rust prevention of the vacuum pump.

The recovery rate of the liquid in the recovery step is preferably 60% or higher. This can more effectively suppress the environmental air pollution.

The EVA hot-melt adhesive obtained by the producing method according to the embodiment has 17 ppb or less of a residual acetic acid or vinyl acetate amount and a very low odor, and accordingly, the obtained EVA hot-melt adhesive is highly industrially useful. The EVA hot-melt adhesive has a feature of containing much fewer residual odor components than a commercially available conventional hot-melt adhesive produced by selecting a polymer material having a small amount of odor components. Accordingly, the present invention also encompasses an EVA hot-melt adhesive (having 17 ppb or less of residual acetic acid or residual vinyl acetate) obtained by the producing method according to the embodiment.

As described above, the present specification discloses techniques of various aspects, among which main techniques are summarized below.

A method for producing an EVA hot-melt adhesive according to one aspect of the present invention comprises: introducing a liquid including at least one of water and an alcohol aqueous solution into a heating kneader while or after kneading a hot-melt adhesive material in a liquid state, at an amount of 0.05 parts by mass or more with respect to 100 parts by mass of the hot-melt adhesive material; and performing vacuuming while heating stirring or dispersing the hot-melt adhesive material and the liquid so as to come into contact with each other.

With this configuration, it is possible to provide an EVA hot-melt adhesive having a high performance and a low odor in a variety of industrial fields without any limitation to material selection.

In the method of producing the hot-melt adhesive, the vacuuming is preferably performed at an exhaust rate in a volume 0.25 or more times larger than a volume of the heating kneader per minute. The introduced amount of the liquid is preferably 0.35 parts by mass or more. This is expected to reliably provide the above-described effects.

The vacuuming is preferably performed at a degree of vacuum higher than a gauge pressure of -60kPa. This is expected to reliably provide the above-described effects.

The producing method preferably further comprises recovering a liquid containing volatile organic compounds by cooling and condensing an exhaust gas exhausted from the heating kneader. Consequently, the life of the vacuum pump can be prolonged.

In the producing method, a recovery rate of the liquid is preferably 60% or higher. This can more effectively suppress the environmental air pollution.

In the producing method, the obtained hot-melt adhesive preferably has 17 ppb or less of residual acetic acid or residual vinyl acetate.

### EXAMPLES

Hereinafter, Examples of the present invention will be described, but the present invention should not be limited thereto.

First, hot-melt adhesive materials used in Examples will be listed below.

Hot-melt adhesive 1: EVA hot-melt adhesive 1
Base resin: ethylene-vinyl acetate copolymer (Ultrathene 722 produced by Tosoh Corporation), 60 parts by mass
Tackifier: hydrogenated petroleum resin (I-marv P-100 produced by Idemitsu Kosan Co., Ltd.), 25 parts by mass
Wax: Fischer-tropsch wax (GTL Sarawax SX100 produced by Shell), 15 parts by mass
The hot-melt adhesive 1 had a melting temperature of 160°C, a viscosity of 8125 mPa·s, and a softening point of 109°C.

### Test Example 1

### Method for producing hot-melt adhesive 1

For the hot-melt adhesive 1, 2kg of material was put into a stirring kneader made of stainless steel (SUS) and having a volume of 4L, and the put material was stirred and melted at a temperature of 165°C or higher.

Then, each liquid shown in Tables 1 to 4 was introduced from the side or/and below by the introduced amount shown in Tables 1 to 4 (at a rate of or mass parts to 100 parts by mass of the hot-melt adhesive material). A vacuum pump which was adjusted exhaust rate in a target magnified volume shown in Tables 1 to 3 per minute to a tank volume (exhaust rate/tank volume) was used to depressurize in the stirring kneader until a target degree of ultimate vacuum. In this way, the hot-melt adhesive according to each of Examples 1 to 24 and Comparative Examples 1 to 4 was obtained.

### Evaluation test 1: measurement of amounts of residual acetic acid and residual vinyl acetate

The amounts of acetic acid and vinyl acetate were measured by a dynamic headspace method employing a gas chromatograph mass analyzer (GC: 7890B GC system manufactured by Agilent Technologies, MS: GC/MSD system of 5977B series manufactured by Agilent Technologies, and DHS: DHS system manufactured by Gerstel GmbH & Co. KG). A heating temperature was set to 160°C and a heating time was set to 60 minutes for the sample. For the gas chromatograph, a capillary column having an inner diameter of 0.25 mm and a length of 60m with dimethyl polysiloxane coating (coating thickness of 1.00 µm) was used. The column had a temperature program of heating at 20°C/min from 40 to 300°C, and thereafter keeping for 20 minutes. This operation allows for the measurement of the amounts of acetic acid and vinyl acetate detected by the mass spectrometer from the calibration curve.

### Evaluation test 2: functional evaluation of odor

First, 50g of a hot-melt adhesive was put into a glass bottle of 140mL. The sample was then heated under an atmosphere of 160°C for 30 minutes, and kept at a room temperature for 10 minutes and thereafter the smell thereof was observed at a distance of 1 to 2 cm.

Evaluation criteria for each test will be described below.

Very Good: 6ppb or less of a residual acetic acid amount, and no odor of acetic acid
Good: 7 to 17ppb of a residual acetic acid amount, and an odor lowering effect
Fair: 18 to 24 ppb of a residual acetic acid amount, and an apparent remaining odor even with a slight odor lowering effect
Poor: 25ppb or more of a residual acetic acid amount, and an apparent presence of an odor

Here, the grounds for "Very Good" conforms to a threshold of smell sense published by Japan Association on Odor Environment.

The results are shown in Tables 1 to 4.

**[Table 1]**

| | Example 1 | Example 2 | Example 3 | Example 4 | Example 5 | Example 6 |
|---|---|---|---|---|---|---|
| Supplied liquid | Dilute methanol aqueous solution 10% | Dilute ethanol aqueous solution 10% | Dilute IPA aqueous solution 10% | Distilled water | Dilute methanol aqueous solution 50% | Methanol 100% |
| Exhaust rate/volume | 0.45 | 0.45 | 0.45 | 0.45 | 0.45 | 0.45 |
| Gauge pressure (Kpa) | -90 | -90 | -90 | -90 | -90 | -90 |
| Liquid amount (parts) | 0.35 | 0.35 | 0.35 | 0.35 | 0.35 | 0.35 |
| Introduction rate (ppm/min) | 175 | 175 | 175 | 175 | 175 | 175 |
| Acetic acid (ppb) | 10 | 5 | 10 | 11 | 6 | 9 |
| Functionality | Good | Very Good | Good | Good | Very Good | Good |

**[Table 2]**

| | Example 7 | Example 8 | Example 9 | Example 10 | Example 11 | Comparative Example 1 |
|---|---|---|---|---|---|---|
| Supplied liquid | Dilute methanol aqueous solution 10% | Dilute methanol aqueous solution 10% | Dilute methanol aqueous solution 10% | Dilute methanol aqueous solution 10% | Dilute methanol aqueous solution 10% | Dilute methanol aqueous solution 10% |
| Exhaust rate/volume | 2.25 | 2.25 | 2.25 | 2.25 | 0.25 | 2.25 |
| Gauge pressure (Kpa) | -98 | -98 | -98 | -98 | -90 | -98 |
| Liquid amount (parts) | 0.05 | 0.10 | 0.20 | 21.00 | 21.00 | 0.03 |
| Introduction rate (ppm/min) | 50 | 50 | 50 | 1,750 | 1,750 | 50 |
| Acetic acid (ppb) | 16 | 11 | 7 | 2 | 15 | 18 |
| Functionality | Good | Good | Good | Very Good | Good | Fair |

**[Table 3]**

| | Example 12 | Example 13 | Example 14 | Example 15 | Comparative Example 2 | Comparative Example 3 | Comparative Example 4 |
|---|---|---|---|---|---|---|---|
| Supplied liquid | Distilled water | Distilled water | Distilled water | Distilled water | None | Vacuuming only | Vacuuming only |
| Exhaust rate/volume | 2.25 | 2.25 | 2.25 | 2.25 | 0.00 | 0.45 | 2.25 |
| Gauge pressure (Kpa) | -98 | -98 | -98 | -98 | - | -97 | -98 |
| Liquid amount (parts) | 0.05 | 0.10 | 0.20 | 21.00 | 0.00 | 0.00 | 0.00 |
| Introduction rate (ppm/min) | 50 | 50 | 50 | 1,750 | 0 | 0 | 0 |
| Acetic acid (ppb) | 17 | 12 | 8 | 3 | >25 | >25 | 20 |
| Functionality | Good | Good | Good | Very Good | Poor | Poor | Fair |

**[Table 4]**

| | Example 16 | Example 17 | Example 18 | Example 19 | Example 20 | Example 21 | Example 22 | Example 23 | Example 24 |
|---|---|---|---|---|---|---|---|---|---|
| Supplied liquid | Dilute methanol aqueous solution 1% | Dilute methanol aqueous solution 50% | Dilute methanol aqueous solution 10% | Dilute IPA aqueous solution 10% | Dilute methanol aqueous solution 50% | Dilute IPA aqueous solution 10% | Dilute methanol aqueous solution 10% | Dilute Methanol Aqueous Solution 50% | Dilute methanol aqueous solution 10% |
| Exhaust rate/volume | 0.25 | 0.25 | 0.25 | 9 | 9 | 9 | 17.5 | 17.5 | 17.5 |
| Gauge pressure (Kpa) | -60 | -101 | -101 | -101 | -101 | -101 | -101 | -101 | -101 |
| Liquid amount (parts) | 0.05 | 25.0 | 50.0 | 0.05 | 25.0 | 50.0 | 0.05 | 25.0 | 50.0 |
| Introduction rate (ppm/min) | 50 | 6250 | 12500 | 50 | 6250 | 12500 | 50 | 6250 | 12500 |
| Acetic acid (ppb) | 17 | 13 | 12 | 15 | 2 | 2 | 8 | 1 | 1 |
| Functional ity | Good | Good | Good | Good | Very Good | Very Good | Good | Very Good | Very Good |

### Consideration

As clearly seen from the results shown in Tables 1 to 4, the EVA hot-melt adhesive (Examples 1 to 24) obtained by the producing method according to the present invention had 17 ppm or less of an acetic acid amount, and had a lowered odor. It was also clear that Examples 5, 10, 15 each falling within the corresponding favorable range of the introduced amount of the liquid could exert much higher effects. Moreover, it was confirmed from the results of Examples 20 to 21, 23 to 24 that the effects can be further enhanced by increasing the exhaust rate and the liquid amount.

In contrast, an apparent odor remains, even with a decrease in a residual acetic acid amount, in Comparative Example 1 showing a shortage in the introduced amount of the liquid. Besides, the residual acetic acid amount exceeds 25 ppb in the hot-melt adhesive in Comparative Example 2 obtained by a conventional producing method without introducing a liquid. Moreover, an odor remains in Comparative Examples 3 to 4 where only the vacuuming was performed as well due to an insufficient decrease in the acetic acid amount.

### Test Example 2

Hot-melt adhesive 2: EVA hot-melt adhesive 2
Base resin: ethylene-vinyl acetate copolymer (EVATHENE UE653-04 produced by USI Corp.), 60 parts by mass
Tackifier: hydrogenated petroleum resin (I-marv P-100 produced by Idemitsu Kosan Co., Ltd.), 25 parts by mass
Wax: Fischer-tropsch wax (GTL Sarawax SX100 produced by Shell), 15 parts by mass
The hot-melt adhesive 2 had a melting temperature of 160°C, a viscosity of 8125 mPa·s, and a softening point of 109°C.

The hot-melt adhesive 2 in each of Examples 25 to 26 and Comparative Example 5 was produced in the same manner as that in Test Example 1 except use of a material for the hot-melt adhesive 2 and each liquid shown in Table 4 under a corresponding condition, and an evaluation test was performed in the same manner as Test Example 1. The results are shown in Table 5.

**[Table 5]**

| | Example 25 | Example 26 | Comparative Example 5 |
|---|---|---|---|
| Supplied liquid | Dilute methanol aqueous solution 10% | Dilute methanol aqueous solution 1% | None |
| Exhaust rate/volume | 0.45 | 0.25 | 0.00 |
| Gauge pressure (Kpa) | -98 | -60 | - |
| Liquid amount (parts) | 0.35 | 0.05 | 0.00 |
| Introduction rate (ppm/min) | 175 | 50 | 0 |
| Acetic acid (ppb) | 16 | 17 | >25 |
| Vinyl acetate (ppt) | 89 | 109 | 406 |
| Functionality | Good | Good | Poor |

### Consideration

As clearly seen from the results shown in Table 5, the EVA hot-melt adhesive 2 (Examples 25 to 26) obtained by the producing method according to the present invention was confirmed to have a decreased vinyl acetate mount as well as a decreased acetic acid amount (89 ppt and 109 ppt), and a lowered odor. In contrast, the hot-melt adhesive 2 in Comparative Example 5 obtained by a conventional producing method without introducing a liquid had 406 ppt of a residual vinyl acetate amount.

### Test Example 3

The following hot-melt adhesives 3 and 4 (both are EVA type ones) were used as hot-melt adhesive materials. The hot-melt adhesive 3 in each of Example 27 and Comparative Example 6 and the hot-melt adhesive 4 in each of Example 28 and Comparative Example 7 were produced in the same manner as Test Example 1 except use of each liquid shown in Tables 6 and 7 under a corresponding condition, and an evaluation test was performed in the same manner as Test Example 1. The results are shown in Tables 6 and 7.

### Hot-melt adhesive 3: EVA hot-melt adhesive 3

Base resin: ethylene-vinyl acetate copolymer (EverFlex EV 220 produced by Dow-Mitsui Polychemicals Company, Ltd.), 50 parts by mass
Tackifier: alicyclic petroleum resin hydride (Quintone A100 produced by Zeon Corporation), 30 parts by mass
Wax: Fischer-tropsch wax (GTL Sarawax SX100 produced by Shell), 20 parts by mass
Antioxidant: hindered phenol antioxidant (Irganox 1010 produced by BASF Japan Ltd.), 1 part by mass
The EVA hot-melt adhesive 3 had a melting temperature of 160°C, a viscosity of 9800 mPa·s, and a softening point of 102°C.

Hot-melt adhesive 4: EVA hot-melt adhesive 4
Base resin: ethylene-vinyl acetate copolymer (EA28150 produced by LG Chem Ltd.), 45 parts by mass
Tackifier: natural rosin resin (SYLVARES RE-100L produced by Arizona Chemical Company, LLC.), 45 parts by mass
Wax: paraffin wax (PW-130 produced by Nippon Seiro Co., Ltd.), 10 parts by mass
The hot-melt adhesive 4 had a melting temperature of 160°C, a viscosity of 6050 mPa·s, and a softening point of 102°C.

**[Table 6]**

| | Example 27 | Comparative Example 6 |
|---|---|---|
| Supplied liquid | Dilute methanol aqueous solution 1% | None |
| Exhaust rate/volume | 0.25 | 0.00 |
| Gauge pressure (Kpa) | -60 | - |
| Liquid amount (parts) | 0.05 | 0.00 |
| Introduction rate (ppm/min) | 50 | 0 |
| Acetic acid (ppb) | 16 | >25 |
| Vinyl acetate (ppt) | 101 | 412 |
| Functionality | Good | Poor |

**[Table 7]**

| | Example 28 | Comparative Example 7 |
|---|---|---|
| Supplied liquid | Dilute methanol aqueous solution 1% | None |
| Exhaust rate/volume | 0.25 | 0.00 |
| Gauge pressure (Kpa) | -60 | - |
| Liquid amount (parts) | 0.05 | 0.00 |
| Introduction rate (ppm/min) | 50 | 0 |
| Acetic acid (ppb) | 17 | >25 |
| Vinyl acetate (ppt) | 93 | 401 |
| Functionality | Good | Poor |

### Consideration

As clearly seen from the results shown in Tables 6 to 7, each of the EVA hot-melt adhesives 3 and 4 (Examples 27 to 28) obtained by the producing method according to the present invention was confirmed to have a smaller vinyl acetate amount as well as a smaller acetic acid amount, and a lower odor than those in Comparative Examples 6 to 7 obtained by a conventional method adopting the same materials.

This application is based on Japanese Patent Application No. 2019-32654 filed in Japan Patent Office on February 26, 2019, the entire disclosure of which are hereby incorporated by reference.

Although the present invention has been fully described by way of example with reference to the above-described specific examples, it is to be understood that various changes and/or modifications will be apparent to those skilled in the art. Therefore, unless otherwise such changes and modifications to be made by those skilled in the art depart from the scope of the present invention hereinafter defined, they should be construed as being included therein.

### Industrial Applicability

The present invention has a variety of industrial applicability in the technical field concerning a hot-melt adhesive and a method for producing the same.

## Claims

1. A method for producing an ethylene vinyl acetate hot-melt adhesive, comprising:
introducing a liquid including at least one of water and alcohol into a heating kneader while or after kneading a hot-melt adhesive material in a liquid state, at an amount of 0.05 parts by mass or more with respect to 100 parts by mass of the hot-melt adhesive material; and
performing vacuuming while heating stirring or dispersing the hot-melt adhesive material and the liquid so as to come into contact with each other.

2. The method for producing an ethylene vinyl acetate hot-melt adhesive according to claim 1, wherein the vacuuming is performed at an exhaust rate in a volume 0.25 or more times larger than a volume of the heating kneader per minute.

3. The method for producing an ethylene vinyl acetate hot-melt adhesive according to claim 1, wherein the introduced amount of the liquid is 0.35 parts by mass or more.

4. The method for producing an ethylene vinyl acetate hot-melt adhesive according to any one of claims 1 to 3, wherein the vacuuming is performed at a degree of vacuum higher than a gauge pressure of -60kPa.

5. The method for producing an ethylene vinyl acetate hot-melt adhesive according to any one of claims 1 to 4, further comprising recovering a liquid containing volatile organic compounds by cooling and condensing an exhaust gas exhausted from the heating kneader.

6. The method for producing an ethylene vinyl acetate hot-melt adhesive according to any one of claims 1 to 5, wherein a recovery rate of the liquid is 60% or higher.

7. The method for producing an ethylene vinyl acetate hot-melt adhesive according to any one of claims 1 to 6, wherein the obtained hot-melt adhesive has 17 ppb or less of residual acetic acid or residual vinyl acetate.

8. A hot-melt adhesive obtained by the method according to any one of claims 1 to 6 for producing an ethylene vinyl acetate hot-melt adhesive, wherein the hot-melt adhesive has 17 ppb or less of residual acetic acid or residual vinyl acetate.
